Europäisches Patentamt

European Patent Office

Office européen des brevets

(11) Veröffentlichungsnummer: **0 108 740**
**A2**

(12) ## EUROPÄISCHE PATENTANMELDUNG

(21) Anmeldenummer: 83890156.9

(22) Anmeldetag: 09.09.83

(51) Int. Cl.³: **G 01 F 11/00**
**G 01 F 11/04**

(30) Priorität: 01.10.82 DE 3236488

(43) Veröffentlichungstag der Anmeldung:
16.05.84 Patentblatt 84/20

(84) Benannte Vertragsstaaten:
AT BE CH DE FR GB IT LI LU NL SE

(71) Anmelder: VEREINIGTE EDELSTAHLWERKE
AKTIENGESELLSCHAFT (VEW)
Elisabethstrasse 12
A-1010 Wien(AT)

(72) Erfinder: Kern, Hans
Wimpasing
D-8221 Vachendorf(DE)

(72) Erfinder: Haslberger, Richard
Wagingerstrasse 18
D-8221 Hufschlag(DE)

(74) Vertreter: Widtmann, Georg, Dr.
Vereinigte Edelstahlwerke Aktiengesellschaft (VEW)
Elisabethstrasse 12
A-1010 Wien(AT)

(54) Dosiereinrichtung.

(57) Es wird eine mobile Dosiereinrichtung zum mengenproportionalen Dosieren eines Dosiermittels (34) in einen Flüssigkeitsstrom geschaffen, bei dem ein on einem Flüssigkeitsstrom durchströmter Flüssigkeitszähler (10) und eine eingangsseitig mit einem Dosiermittelvorrat (33) und ausgangsseitig mit einer Dosierstelle (36) verbindbare Dosierpumpe (12) vorgesehen ist, die in Abhängigkeit von vom Flüssigkeitszähler (10) gelieferter Signale Dosiermittel (34) aus dem Dosiermittelvorrat (33) in den Flüssigkeitsstrom eindosiert. Der Flüssigkeitszähler (10) ist in ein mit Zulaufanschluß (7) und Ablaufanschluß (8) versehenes kurzes Leitungsstück (6) eingebaut und das Leitungsstück (6), der Flüssigkeitszähler (10) und die Dosierpumpe (12) sind in einem diese Teile allseitig einschließenden Tragrahmen (1) montiert. Der Antrieb der Dosierpumpe (12) erfolgt über den Druck des Flüssigkeitsstromes. Damit wird eine vielseitig einsetzbare von externer Versorgung unabhängige Dosiereinrichtung geschaffen, die insbesondere zur Dekontamination bzw. Entgiftung geeignet ist.

./...

Fig. 2

- 1 -

## Dosiereinrichtung

Die Erfindung betrifft eine Dosiereinrichtung zum mengenproportionalen Dosieren eines Dosiermittels in einen Flüssigkeitsstrom mit einem Flüssigkeitszähler und einer eingangsseitig mit einem Dosiermittelvorrat und ausgangsseitig mit einer Dosierstelle verbindbaren Dosierpumpe, die
in Abhängigkeit von vom Flüssigkeitszähler gelieferter
Signale Dosiermittel aus dem Dosiermittelvorrat in den
Flüssigkeitsstrom eindosiert.

Derartige bekannte Dosiereinrichtungen werden immer dann
verwendet, wenn es erforderlich ist, einen Flüssigkeitsstrom mit einem Zusatz zu versehen, beispielsweise bei der
Wasseraufbereitung oder bei der Entgiftung bzw. Dekontamination von mit Gift in Berührung gekommenen bzw. kontaminierten Personen und Gegenständen. Insbesondere im letztgenannten Fall ist es erforderlich, daß die Dosiereinrichtung
sofort verfügbar ist und unabhängig von im Eventualfall
nicht vorhandenen Versorgungsanschlüssen arbeiten kann.
Ferner ist eine exakte Einhaltung der Konzentration äußerst
wichtig, um eine Entgiftung zu gewährleisten. Diese Erfordernisse können von herkömmlichen Dosiereinrichtungen, die
auf Fahrzeugen montiert sind und nur zusammen mit dem Fahrzeug in Betrieb genommen werden können, nicht erfüllt werden.

Es ist daher Aufgabe der Erfindung, eine Dosiereinrichtung
der eingangs beschriebenen Art zu schaffen, die sofort verfügbar ist und abgesehen von einem Flüssigkeitsanschluß unabhängig von äußeren Anschlüssen arbeiten kann. Es soll ferner erkennbar sein, ob die Vorrichtung auch ordnungsgemäß
arbeiten.

Diese Aufgabe wird durch eine Dosiereinrichtung der eingangs
beschriebenen Art gelöst, die gemäß der Erfindung dadurch
gekennzeichnet ist, daß der Flüssigkeitszähler in ein mit Zu-

- 2 -

lauf- und Ablaufanschluß versehenes kurzes Leitungsstück eingebaut ist und daß das Leitungsstück, der Flüssigkeitszähler und die Dosierpumpe in einem diese Teile allseitig einschließenden Tragrahmen montiert sind.

Die Dosierpumpe ist vorzugsweise als Kolbendosierpumpe ausgebildet, deren Hub durch einen von Hand einstellbar verschiebbaren Gegenkolben einstellbar begrenzt ist. Der Antrieb erfolgt vorzugsweise durch den Druck des Flüssigkeitstroms, mit dem über Ventile gesteuert ein Antriebskolben abwechselnd von beiden Seiten beaufschlagbar ist. Dadurch ist nur eine geringe Antriebsleistung erforderlich. Die für eine Steuerung erforderliche Leistung wird von einer ebenfalls innerhalb des Tragrahmens montierten Batterie, bei Vorhandensein einer externen Spannungsquelle (Netz, Fahrzeugbatterie) auch von dieser geliefert. Gemäß einer Weiterbildung der Erfindung sind Anzeigevorrichtungen vorgesehen, die den Betrieb der Dosierpumpe, die die Dosiermittelzufuhr und einen Dosiermittelmangel anzeigen. In einer bevorzugten Ausführungsform ist die Dosierpumpe von Hand betätigbar, so daß nach dem Einsatz der Dosiereinrichtung eine Spülung bzw. frostsichere Entwässerung möglich ist. Vorzugsweise ist ferner der Aufbau dadurch erschütterungsfest gestaltet, daß alle Teile gegenüber dem Tragrahmen schwingungsgedämpft gelagert sind.

Weitere Merkmale und Zweckmäßigkeiten ergeben sich aus der Beschreibung eines Ausführungsbeispiels im Zusammenhang mit den Figuren. Von den Figuren zeigen:

Fig. 1 eine schematische Ansicht; und

Fig. 2 in schematischer Darstellung Aufbau und Schaltung einer erfindungsgemäßen Dosiereinrichtung.

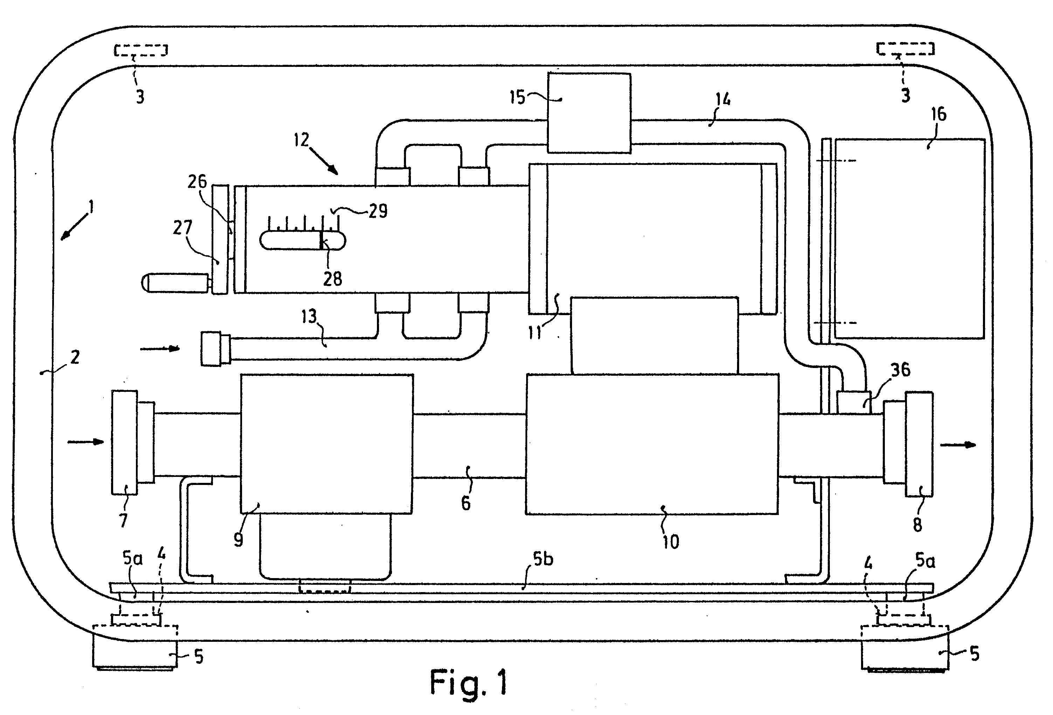

Figur 1 zeigt schematisch die innerhalb des Tragrahmens 1 eingebauten wesentlichen Teile der Dosiereinrichtung. Der Tragrahmen 1 besteht im wesentlichen aus zwei seitlichen, zu einem geschlossenen Zug in Form eines Rechtecks mit abgerundeten Ecken gebogenen Bügeln 2 und jeweils zwei die Bügel 2 verbindenden obere bzw. untere Stege 3, 4. Die Bügel 2 sind im wesentlichen senkrecht, die Stege 3, 4 waagrecht und in der Nähe der abgerundeten Ecken der Bügel 2 angeordnet. An den unteren Stegen 4 sind Füße 5 zum Aufstellen des Tragrahmens vorgesehen. Zum besseren Transport können die oberen Stege 3 mit Handgriffen versehen sein.

Innerhalb des vom kastenförmigen Tragrahmen 1 eingeschlossenen Bereiches ist auf einer mit diesem über schwingungsdämpfende Elemente 5a verbundenen Platte 5b ein Leitungsstück 6 mit einem Zulaufanschluß 7 und einem Ablaufanschluß 8 montiert. Die Länge des Leitungsstücks 6 ist so gewählt, daß Zulaufanschluß 7 und Ablaufanschluß 8 jeweils nicht über dem Tragrahmen hinausstehen. Der Zulaufanschluß 7 und der Ablaufanschluß 8 sind jeweils als herkömmliche Wasserschlauchanschlüsse zur Verbindung mit Hydranten, Feuerwehrautotanks etc. ausgebildet. In dem Leitungsstück 6 befinden sich ferner ein Filter 9 und ein Flüssigkeitszähler 10. Der Flüssigkeitszähler 10 ist mit dem Antrieb 11 einer Dosierpumpe 12 verbunden, die über einen Zulauf 13 Dosiermittel aus einem nicht gezeigten Dosiermittelvorrat in eine Dosierleitung 14 fördert, welche zwischen dem Flüssigkeitszähler 10 und dem Ablaufanschluß 8 in das Leitungsstück 6 mündet. In der Dosierleitung 14 ist ein Strömungswächter 15 eingebaut. Die Dosierpumpe 12 sowie eine in Figur 1 schematisch angedeutete Steuerung 16 sind ebenfalls innerhalb des Tragrahmens 1 derart angeordnet, daß sie vom Tragrahmen 1 allseitig umgeben bzw. eingeschlossen werden. Zur erschütterungsfesten Lagerung sind alle vom Tragrahmen eingeschlossenen Teile an der Platte 5b montiert.

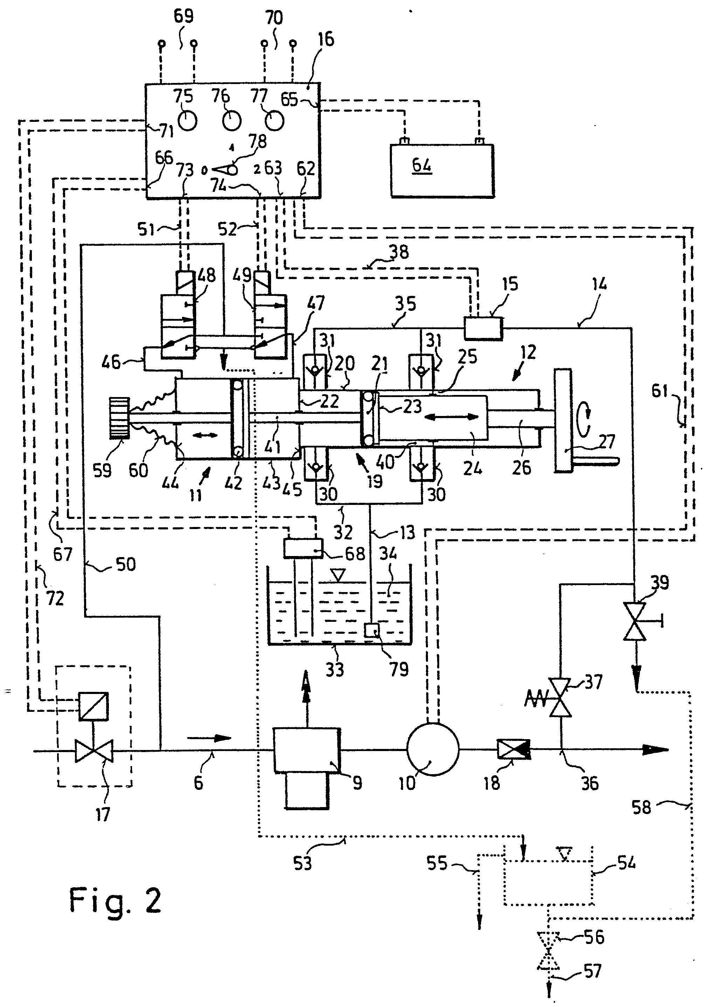

Figur 2 zeigt schematisch den Aufbau und die Schaltung aller Teile der erfindungsgemäßen Dosiereinrichtung. Im unteren Bereich der Figur 2 ist das Leitungsstück 6 mit dem Filter 9

- 4 -

und dem Flüssigkeitszähler 10 dargestellt. In dieser Ausführungsform ist in das Leitungsstück 6 strömungsmäßig vor dem Filter 9 ein von der Steuerung 16 ansteuerbares Ventil 17 sowie strömungsmäßig nach dem Flüssigkeitszähler 10 ein Rückschlagventil 18 eingebaut.

Der mittlere Teil der Figur 2 zeigt die Dosierpumpe 12 mit dem Antrieb 11 und einem Dosierteil 19. Das Dosierteil 19 weist einen Dosierzylinder 20 auf, in dem ein Dosierkolben 21 verschiebbar ist. Die Hubbewegung des Dosierkolbens 21 ist auf der einen Seite durch eine Stirnfläche 22 des Dosierzylinders 20, auf der anderen Seite durch die Stirnfläche 23 eines Gegenkolbens 24 begrenzt. Der Gegenkolben 24 ist koaxial zum Dosierzylinder 20 und Dosierkolben 21 angeordnet und in der zweiten Stirnfläche 25 des Dosierzylinders 20 verschiebbar gelagert. Auf der dem Dosierkolben 21 abgewandten Seite des Gegenkolbens 24 ist der Gegenkolben 24 über eine Spindel 26 mit einem Handrad 27 verbunden, durch dessen Drehung der Gegenkolben 24 axial relativ zum Dosierzylinder 20 verschoben werden kann. Anstelle des Handantriebs mit Handrad 27 und Spindel 26 ist selbstverständlich auch eine andere hand- oder motorbetriebene Verstellung des Gegenkolbens 24 möglich. Die Lage des Gegenkolbens 24 wird in der in Figur 1 gezeigten Weise über einen mit dem Gegenkolben 24 verbundenen Zeiger 28 auf einer Skala 29 angezeigt. Die Einteilung der Skala 29 ist vorzugsweise so gewählt, daß in einer weiter unten beschriebenen Weise die vom Zeiger 28 angezeigte Stellung des Gegenkolbens 24 auf der Skala 29 direkt den Dosiermittelanteil angibt.

An der Umfangsfläche des Dosierzylinders 20 sind in unmittelbarer Nähe der beiden Stirnflächen 22, 25 jeweils zwei Saugventile 30 bzw. zwei Druckventile 31 angeordnet. Die über eine Verbindungsleitung 32 verbundenen Saugventile 30 sind über einen an die Verbindungsleitung 32 angeschlossenen Zulauf 13 mit einem Dosiermittelbehälter 33 verbunden, in dem sich das zu dosierende Dosiermittel 34 befindet. Die über eine Verbindungsleitung 35 verbundenen Druckventile sind in der oben beschriebenen Weise über eine an die Verbindungsleitung 35 angeschlossene Dosierleitung 14 mit dem Leitungsstück 6 an einer Dosierstelle 36 verbunden. In die Dosierleitung 14 ist ein Dosierventil 37 sowie der Strömungswächter 15 geschaltet, dessen Ausgang mit der Steuerung 16 über die Signalleitung 38 verbunden ist. Die Dosierleitung 14 weist ferner eine Abzweigung mit einem Entlüftungsventil 39 auf.

Die Anordnung der Saugventile 30 bzw. Druckventile 31 ist so gewählt, daß Zufluß und Abfluß durch das an der Stirnfläche 22 angeordnete Saugventil 30 bzw. Druckventil 31 möglich ist, bis der Dosierkolben 21 an der den Hub des Dosierkolbens 21 an einer Seite begrenzenden Stirnfläche 22 anliegt, bzw. daß der Zufluß und Abfluß durch das bei der Stirnfläche 25 angeordnete Saugventil 30 bzw. Druckventil 31 möglich ist, bis der Dosierkolben 21 an der den Hub des Dosierkolbens 21 auf der anderen Seite begrenzenden Stirnfläche 23 des Gegenkolbens 24 anliegt, und zwar unabhängig von der Stellung des Gegenkolbens 24. Dazu weist der Gegenkolben 24 einen Durchmesser auf, der kleiner ist als der des Dosierkolbens 21 bzw. der Innendurchmesser des Dosierzylinders 20, so daß zwischen Dosierkolben 21 und Dosierzylinder 20 ein Spalt 40 vorhanden ist, durch den Dosiermittel in den bzw. von dem Hubraum des Dosierkolbens 21 strömen kann. Die Länge des Gegenkolbens 24 ist so gewählt, daß der Hub des Dosierkolbens 21 bei einer ganz in den Dosierzylinder 20 geschobenen Stellung des Gegenkolbens 24 nahezu Null wird, d.h., daß der Abstand zwischen der Stirnfläche 22 und der Stirnfläche 23 des Gegenkolbens 24 etwa der Höhe des Dosierkolbens 21 entspricht. Der Gegenkolben 24 ist ferner so weit aus dem Dosierzylinder 20 herausbewegbar, daß seine Stirnfläche 23 etwa in einer Ebene mit der

- 6 -

Stirnfläche 25 des Dosierzylinders liegt. In dieser Stellung ist ein maximaler Hub des Dosierkolbens 21 möglich.

Der Dosierkolben 21 ist über eine Kolbenstange 41 mit einem Antriebskolben 42 verbunden. Der Antriebskolben 42 ist in einem koaxial zum Dosierzylinder 20 an dessen Stirnfläche 22 angrenzenden Antriebszylinder 43 verschiebbar. Die Länge des Antriebszylinders 43 entspricht der Länge des Dosierzylinders 20, so daß in einer Stellung, in der der Dosierkolben 21 an der Stirnfläche 22 anliegt, der Antriebskolben 42 an einer Stirnfläche 44 des Antriebszylinders anliegt, und in einer zweiten Stellung, in der der Dosierkolben 21 an der Stirnfläche 23 des Gegenkolbens 24 anliegt, wenn dieser sich in seiner am weitesten herausgeschobenen Stellung befindet, der Antriebszylinder 43 an der an die Stirnfläche 22 angrenzenden Stirnfläche 45 des Antriebszylinders 43 anliegt. Der Antriebszylinder 43 ist über jeweils eine nahe der Stirnfläche 44 bzw. 45 in den Antriebszylinder 43 mündende Leitung 46 bzw. 47, jeweils ein Magnetventil 48 bzw. 49 und eine in das Leitungstück 6 mündende Leitung 50 mit dem Leitungsstück 6 verbunden. Die Eingänge der Magnetventile 48, 49 sind jeweils über Steuerleitungen 51, 52 mit entsprechenden Ausgängen der Steuerung 16 verbunden. Die Magnetventile 48, 49 sind so geschaltet, daß jeweils eine Seite des Antriebskolbens 42 über die Leitung 50 mit dem Druck des Mediums im Leitungsstück 6 abwechselnd beaufschlagbar ist. An die Ablaufseite der Ventile 48, 49 ist eine gemeinsame in Figur 2 gepunktet gezeichnete Abflußleitung 53 angeschlossen, die in einen Behälter 54 einmündet. Der Behälter 54 besitzt einen Überlauf 55 sowie einen über ein Ventil 56 verschließbaren Abfluß 57. Der Abfluß 57 ist zwischen Behälter 54 und Ventil 56 über eine Leitung 58 mit der Dosierleitung 14 über das Entlüftungsventil 39 verbunden.

In der in Figur 2 gezeigten Ausführungsform ist die Kolbenstange 41 derart verlängert ausgebildet, daß sie sich durch die der an den Dosierzylinder 20 angrenzenden Stirnfläche 45 gegenüberliegenden Stirnfläche 44 des Antriebszylinders hindurcherstreckt. Am freien Ende der Kolbenstange 41 außerhalb des Antriebszylinders 43 ist ein Knauf 59 an der Kolbenstange 41 befestigt. Das freiliegende Teil der Kolbenstange zwischen Antriebszylinder 43 und Knauf 59 ist durch einen Balg 60 abgedeckt. Die Kolbenstange 41 trägt also an ihren beiden Enden den Knauf 59 bzw. den Dosierkolben 21 und in ihrem mittleren Bereich den Antriebskolben 42 und erstreckt sich von außen durch beide Stirnflächen 44, 45 des Antriebszylinders 43 in den Dosierzylinder 20.

Die Steuerung 16 weist einen über die Signalleitung 61 mit dem Flüssigkeitszähler 10 verbundenen Eingang 62, einen mit dem Strömungswächter 15 über die Signalleitung 38 verbundenen Eingang 63, sowie einen mit einer ebenfalls innerhalb des Tragrahmens angeordneten Batterie 64 verbundenen Eingang 65 auf. Ein weiterer Eingang 66 der Steuerung 16 ist über die Signalleitung 67 mit dem Ausgang eines im Dosiermittelbehälter 33 angeordneten Leerstandsmelders 68 verbunden. An der Steuerung 16 sind ferner Klemmen 69 für den Anschluß einer Netzspannung von beispielsweise 220 V und Klemmen 70 zum Anschluß einer 12 V-Spannungsversorgung vorgesehen. Ein Ausgang 71 ist über eine Steuerleitung 72 mit dem Ventil 17, ein Ausgang 73 über die Steuerleitung 51 mit dem Magnetventil 48 und ein Ausgang 74 über die Steuerleitung 52 mit dem Magnetventil 49 verbunden. Am Gehäuse der Steuerung 16 sind drei optische Signalvorrichtungen vorgesehen, nämlich eine bei Betrieb der Dosiereinrichtung grün leuchtende Betriebsanzeige 75, eine bei Vorliegen eines Signals vom Strömungswächter 15 über die Signalleitung 38 gelb leuchtende Dosieranzeige 76 und eine bei Vorliegen eines die Entleerung des Dosiermittelbehälters 33 anzeigenden Signals vom Leerstandsmelder 68 über die Signalleitung 67 rot leuchtende Dosiermittelleerstandsanzeige 77. An der Steuerung ist

- 8 -

schließlich ein Hauptschalter 78 vorgesehen, in dessen "0"-Stellung die Dosiereinstellung ausgeschaltet ist, in dessen "1"-Stellung die Magnetventile 48 und 49 gleichgeschaltet sind und in dessen "2"-Stellung die Anlage in Betrieb ist.

Im Betrieb wird die erfindungsgemäße Dosiereinrichtung zum Einsatzort gefahren und dort in geeigneter Weise aufgestellt. Der Zulaufanschluß 7 wird mit einem Hydranten, dem Tank eines Feuerwehrfahrzeugs, einem Trinkwassersystem oder einem anderen vorhandenen Druckwasserspeicher verbunden. An den Ablaufanschluß 8 wird eine für den jeweiligen Einsatzfall geeignete Sprüh- oder Spritzvorrichtung angeschlossen. Bei Vorhandensein von externen Spannungsquellen (Netz, Fahrzeugbatterie etc.) können diese mit den entsprechenden Klemmen 69, 70 der Steuerung 16 verbunden werden. Erfolgt kein Anschluß an die Klemmen 69, 70, dann wird die Steuerung 16 automatisch von der in den Tragrahmen 1 eingebauten Spannungsquelle 64 versorgt. Ebenfalls am Einsatzort wird der Dosiermittelbehälter 33 aufgestellt und über die Zulaufleitung 13 mit der Dosierpumpe 12 verbunden. Dazu ist am Ende der Zulaufleitung 13 vorzugsweise eine Sauglanze 79 vorgesehen, die in den Dosiermittelbehälter 33 eingeführt wird. Ferner wird der Leerstandsmelder 68 in den Dosiermittelbehälter 33 eingeführt. In einer besonders bevorzugten Ausführungsform ist der Leerstandsmelder 68 an der Sauglanze 79 vorgesehen, so daß nur diese in den Dosiermittelbehälter 33 eingeführt werden muß. Schließlich wird durch Betätigung des Handrades 27 der Gegenkolben 24 so weit verschoben, bis der Zeiger 28 auf der Skala 29 die gewünschte bzw. geforderte Konzentration des Dosiermittels anzeigt.

Durch Schalten des Hauptschalters 78 in seine "2"-Stellung öffnet die Steuerung 16 über die Signalleitung 72 das Ventil 17 und Flüssigkeit beginnt durch das Leitungsstück 6 mit Filter 9, Flüssigkeitszähler 10 und Rückschlagventil 18 zur Sprüh- bzw. Spritzvorrichtung zu strömen. Der Flüssigkeitszähler 10 liefert in Abhängigkeit der pro Zeit durchströmenden Flüssigkeitsmenge Signale über die Signalleitung 61 an die Steuerung 16. Diese zeigt den Betriebszustand durch Aufleuchten der grünen Betriebsanzeige 75 an und schaltet die Magnetventile 48, 49 über die Steuerleitungen 51, 52 jeweils so, daß der Antriebskolben 42 von beiden Seiten abwechselnd mit Druck der Flüssigkeit über die Leitung 50 beaufschlagt wird. Dadurch führt der Antriebskolben 42 eine hin- und hergehende Bewegung aus. Die Zahl der Hübe des Antriebskolbens 42 pro Zeit wird durch den von der Steuerung 16 vorgegebenen Umschalttakt der Ventile 48, 49 bestimmt. Dieser Takt wird von der Steuerung 16 auf Grund der Signale vom Flüssigkeitszähler 10 bestimmt. Die Größe des nach jedem Umschalten durchgeführten Hubes von Antriebskolben 42 und damit dem Dosierkolben 21 wird durch die vorgewählte Stellung des Gegenkolbens 24 bestimmt. Bei jeder Hubbewegung saugt der Dosierkolben auf seiner einen Seite über die Saugventile 30 und die Zulaufleitung 13 Dosiermittel aus dem Dosiermittelbehälter 33 und fördert auf seiner anderen Seite gleichzeitig bei der vorherigen Bewegung angesaugtes Dosiermittel über die Druckventile 31 und die Dosierleitung 14 zur Dosierstelle 36 in den Flüssigkeitsstrom. Bei jedem Hub bewegt sich der Dosierkolben zwischen der Stirnfläche 22 des Dosierzylinders und der Stirnfläche 23 des Gegenkolbens. Die Einstellung der Dosiermittelkonzentration im Flüssigkeitsstrom erfolgt also zum einen durch die Zahl der Hübe des Dosierkolbens 21 pro Zeit, zum anderen durch den vom Gegenkolben 24 begrenzten Hub des Dosierkolbens 21. Wird die Zahl der Hübe pro Zeit von der Steuerung 16 in einem festen Verhältnis zum Dosiermittelstrom vorgegeben, so ist die Dosiermittelkonzentration durch Verschieben des Gegenkolbens 24 eindeutig einstellbar. Der Strömungswächter 15 stellt einen Dosiermittelstrom fest, was durch die gelbe Dosieranzeige 76 angezeigt wird. Dosiermittelmangel wird vom Leerstandsmelder 68 über die Signalleitung 67 an die Steuerung 16 gemeldet und verursacht ein Aufleuchten der Dosiermittelleerstandsanzeige 77.

Die zur Betätigung des Antriebskolbens 42 verwendete Flüssigkeitsmenge läuft über die Abflußleitung 53 in den Behälter 54 und sammelt sich dort bis zur Höhe des Überlaufs 55. Nach dem Dosieren wird der Zulaufanschluß 7 und der Ablaufanschluß 8 abgetrennt, der Hauptschalter in die "1"-Stellung (Gleichschaltung der Magnetventile 48, 49) bewegt und die Sauglanze 79 in den Behälter 54 eingeführt. Die Dosierpumpe wird nun von Hand gespült. Dies erfolgt so, daß der Dosierkolben 21 von Hand mittels des Knaufes 59 hin- und herbewegt wird. Bei jeder Hubbewegung saugt der Dosierkolben 21 Flüssigkeit aus dem Behälter 54 und drückt diese in die Dosierleitung 14. Dadurch werden Rückstände des Dosiermittels aus der Dosierpumpe und den damit verbundenen Leitungen herausgespült. Anschließend kann die Dosierpumpe dadurch entwässert werden, daß die Ansaugöffnung der Sauglanze 79 ins Freie gehalten, das Entlüftungsventil 39 geöffnet und die Dosierpumpe mittels des Knaufes 59 durch Hin- und Herbewegen betätigt wird.

Mit der erfindungsgemäßen Dosiereinrichtung wird eine mobile Dosiereinrichtung geschaffen, die von nahezu jedem Fahrzeug zu ihrem Einsatzort gebracht, dort leicht aufgestellt werden kann und unabhängig von dort vorhandener Energieversorgung ist. Dies wird insbesondere dadurch erreicht, daß die zum Antrieb der Dosierpumpe erforderliche Energie dem Druck der Flüssigkeit entnommen wird. Daher ist lediglich Energie zur Steuerung der Dosierpumpe und der Anzeigevorrichtungen erforderlich. Ferner ist durch die volumetrische Dosierung eine hohe Dosiergenauigkeit unabhängig vom Dosiergegendruck, dem Druck der Flüssigkeit im Leitungsstück 6, möglich. Die Dosierpumpe arbeitet ferner unabhängig von der Viskosität des Dosiermediums auf Grund dessen

- 11 -

chemischer Zusammensetzung oder der Umgebungsbedingungen. Nach dem Einsatz kann die Dosiereinrichtung von Hand gespült und entlüftet werden. Dadurch wird eine Dosiermittelablagerung in der Pumpe vermieden und eine frostsichere Lagerung ermöglicht. Damit ist die erfindungsgemäße Dosiereinrichtung insbesondere geeignet für die Entgiftung bzw. Dekontamination im Zivilschutzbereich, im militärischen Bereich und im Feuerwehrbereich bei der Zumischung von Dosiermitteln in einen Wasserstrom.

- 12 -

Patentansprüche:

1. Dosiereinrichtung zum mengenproportionalen Dosieren eines Dosiermittels in einen Flüssigkeitsstrom mit einem Flüssigkeitszähler (10) und einer eingangsseitig mit einem Dosiermittelvorrat (33) und ausgangsseitig mit einer Dosierstelle (36) verbindbaren Dosierpumpe (12), die in Abhängigkeit von vom Flüssigkeitszähler (10) gelieferter Signale Dosiermittel (34) aus dem Dosiermittelvorrat (33) in den Flüssigkeitsstrom eindosiert, dadurch gekennzeichnet, daß der Flüssigkeitszähler (10) in ein mit Zulaufanschluß (7) und Ablaufanschluß (8) versehenes kurzes Leitungsstück (6) eingebaut ist und daß das Leitungsstück (6), der Flüssigkeitszähler (10) und die Dosierpumpe (12) in einem diese Teile allseitig einschließenden Tragrahmen (1) montiert sind.

2. Dosiereinrichtung nach Anspruch 1, dadurch gekennzeichnet, daß innerhalb des Tragrahmens (1) eine Steuerung (16) vorgesehen ist, die eingangsseitig mit dem Flüssigkeitszähler (10) und ausgangsseitig mit der Dosierpumpe (12) verbunden ist und die Dosierpumpe (12) in Abhängigkeit der von dem Flüssigkeitszähler (10) gelieferten Signale steuert.

3. Dosiereinrichtung nach Anspruch 2, dadurch gekennzeichnet, daß innerhalb des Tragrahmens (1) eine Spannungsquelle (64) zur Stromversorgung der Steuerung vorgesehen ist.

4. Dosiereinrichtung nach einem der Ansprüche 1 bis 3, dadurch gekennzeichnet, daß eine Anzeigevorrichtung (75, 76) zur Anzeige des Betriebs der Dosierpumpe und/oder der Dosiermitteldosierung vorgesehen ist.

5. Dosiereinrichtung nach einem der Ansprüche 2 bis 4, dadurch gekennzeichnet, daß die Steuerung (16) mit einem

- 13 -

Leerstandsmelder (68) verbunden ist und eine Anzeige zur
Anzeige von Dosiermittelmangel vorgesehen ist.

6. Dosiereinrichtung nach Anspruch 5, dadurch gekennzeichnet, daß das Leitungsstück (6) ein mit einem Ausgang (71)
der Steuerung (16) verbundenes Absperrventil (17) aufweist, das auf von der Steuerung (16) bei Dosiermittelmangel gelieferte Signale anspricht und das Leitungsstück (6) absperrt.

7. Dosiereinrichtung nach einem der Ansprüche 1 - 6, dadurch gekennzeichnet, daß die Dosierpumpe (12) ein Dosierteil (19) mit einem Dosierzylinder (20) und einem
Dosierkolben (21) mit einstellbarem Hub aufweist.

8. Dosiereinrichtung nach Anspruch 7, dadurch gekennzeichnet, daß die Einstellung des Hubes durch einen im Dosierzylinder (20) verschiebbar angeordneten Gegenkolben (24) erfolgt.

9. Dosiereinrichtung nach Anspruch 8, dadurch gekennzeichnet, daß der Gegenkolben (24) mit einer Anzeigevorrichtung (28) verbunden ist, die die Stellung des Gegenkolbens (24) auf einer den eindosierten Dosiermittelanteil
angebenden Skala (29) anzeigt.

10. Dosiereinrichtung nach einem der Ansprüche 7 - 9, dadurch
gekennzeichnet, daß die Dosierpumpe (12) einen Antriebsteil (11) aufweist, der vom Druck des Flüssigkeitsstroms
betätigbar ist.

11. Dosiereinrichtung nach Anspruch 10, dadurch gekennzeichnet, daß das Antriebsteil (11) einen in einem Antriebszylinder (43) verschiebbaren, mit dem Dosierkolben (21)
über eine Kolbenstange (41) verbundenen Antriebskolben (42)
aufweist, der über eine den Antriebszylinder (43) mit dem
Leitungsstück (6) verbindende Leitung (50) mittels von der

- 14 -

Steuerung (16) betätigter Ventile (48, 49) von beiden
Seiten abwechselnd mit Druck beaufschlagbar ist.

12. Dosiereinrichtung nach einem der Ansprüche 7 - 11, dadurch gekennzeichnet, daß die Dosierpumpe (12) zur Spülung und zur Entwässerung handbetätigbar ist (59).

Fig.1

Fig. 2